# EUROPÄISCHE PATENTSCHRIFT

(11) **EP 3 927 490 B1**
(45) Veröffentlichungstag und Bekanntmachung des Hinweises auf die Patenterteilung: **21.06.2023**
(21) Anmeldenummer: 20707835.3
(22) Anmeldetag: 14.02.2020
(51) Int. Cl.: B23K 20/12, B23K 101/04

(54) **WERKZEUG ZUM REIBRUEHRSCHWEISSEN UND VERFAHREN ZUM HERSTELLEN VON PANEELEN**
TOOL FOR FRICTION STIR WELDING AND METHOD FOR PRODUCING PANELS
OUTIL DE SOUDAGE PAR FRICTION-MALAXAGE ET PROCÉDÉ DE PRODUCTION DE PANNEAUX

(30) Priorität: 19.02.2019 DE 102019104134
(43) Veröffentlichungstag der Anmeldung: 29.12.2021
(73) Patentinhaber: Nemak, S.A.B. de C.V., 66017 García, Nuevo León (MX)
(72) Erfinder: SCHUEDDEKOPF, Sven, 60314 Frankfurt (DE)
(74) Vertreter: Cohausz & Florack
(86) Internationale Anmeldenummer: PCT/IB2020/051252
(87) Internationale Veröffentlichungsnummer: WO 2020/170098

(56) Entgegenhaltungen:
- EP-A1- 2 995 411
- JP-A- 2008 012 550
- JP-A- 2012 250 277

## Beschreibung

Die Erfindung betrifft ein Werkzeug zum Reibrührschweißen, wobei das Werkzeug eine zentrale Achse, die stiftartig ausgebildet und zum Ankoppeln an eine Antriebseinrichtung vorgesehen ist, eine erste Reibschulter, die von der zentralen Achse getragen ist, eine zweiten Reibschulter, die in Längsrichtung der zentralen Achse in einem Abstand zu der ersten Reibschulter von der zentralen Achse getragen ist, zwei von der zentralen Achse getragene Stützschultern, die zwischen den Reibschultern angeordnet sind und von denen mindestens eine auf der zentralen Achse axial verschiebbar gelagert ist, und eine Stelleinrichtung umfasst, die zwischen den Stützschultern angeordnet und dazu eingerichtet ist, im Gebrauch mindestens auf die axial verschiebbare Stützschulter eine Kraft auszuüben, welche in Richtung der zu der axial verschiebbaren Stützschulter jeweils nächstbenachbart angeordneten Reibschulter gerichtet ist.

Ebenso betrifft die Erfindung ein Verfahren zum Herstellen von Paneelen aus Paneelelementen, die aus einem verschweißbarem Werkstoff vorgefertigt sind, wobei bei die Paneelelemente mit einem Werkzeug der voranstehend angegebenen Art reibrührverschweißt werden.

Ein Werkzeug dieser Art ist hinaus aus der EP 2 995 411 A1 (Grundlage für den Oberbegriff des Anspruchs 1) bekannt. Als Stelleinrichtung dient bei diesem Werkzeug eine Kombination aus Tellerfedern, die die axial verschiebbaren Stützschultern mit einer elastischen, in Richtung der jeweils zugeordneten Reibschulter gerichteten Kraft belasten.

Eine Zusammenfassung von aus dem weiteren Stand der Technik bekannten Werkzeugen für das Reibrührschweißen enthält die DE 10 2005 030 800 A1. Wie dort erläutert und in der WO 93/10935 näher beschrieben, werden zum Reibrührschweißen die miteinander zu verschweißenden Werkstücke in Kontakt gebracht. In die so zwischen den Werkstücken gebildete Fügezone wird ein um seine Längsachse drehend angetriebener Stift eines Reibrührwerkzeugs eingeführt, bis eine oberhalb des Schweißstiftes an dem Werkzeug angeordnete Schulter auf der Oberfläche der Werkstücke sitzt. Dabei wird durch die Relativbewegung zwischen dem Stift und den Werkstücken Reibungswärme generiert, so dass die zueinander in der Fügezone benachbarten Werkstoffbereiche der Werkstücke einen plastifizierten Zustand einnehmen und das Material der Werkstücke in der Fügezone miteinander vermischt wird. Das Werkzeug wird, während der rotierende Schweißstift in Kontakt mit dem in der Fügezone vorhandenen Material steht, kontinuierlich entlang der Verbindungslinie zwischen den miteinander zu verschweißenden Werkstücken bewegt, so dass in einem kontinuierlich fortschreitenden Vorgang der um den Schweißstift sich befindende Werkstoff aufgeweicht, vermischt und anschließend verfestigt wird. Wie in der DE 10 2005 030 800 A1 weiter erläutert, kann es abhängig von der jeweils zu bewältigenden Schweißaufgabe zweckmäßig sein, die Reibschulter mit der Drehbewegung des Schweißstifts zu verkoppeln, um eine möglichst intensive Bearbeitung der Fügezone zu bewirken. Bei anderen Anwendungen kann es jedoch auch zweckmäßig sein, die Reibschulter von der Drehung des Schweißstifts zu entkoppeln, um die Gefahr der Entstehung von Verzug in der Fügezone zu minimieren. Gleichzeitig kann der Schweißstift in axialer Richtung verstellbar ausgebildet sein, um die Tiefe an die jeweils gegebene Materialdicke anpassen zu können, bis zu der der Schweißstift in das Material der miteinander zu verschweißenden Werkstücke eintaucht.

Neben dem voranstehend erläuterten Stand der Technik ist aus der US 2009/0230173 A1 ein mehrschultriges Reibrührschweißwerkzeug bekannt, das eine zentrale Achse aufweist, die zum Ankoppeln an eine Antriebseinrichtung vorgesehen ist. Die zentrale Achse ist als Gewindestange ausgebildet und trägt zwei Reibrührmodule sowie den Reibrührmodulen jeweils zugeordnete Schultern. Die Schultern und Reibrührmodule sind koaxial zur zentralen Achse ausgerichtet und über zu deren Gewinde korrespondierende Gewinde mit der zentralen Achse verkoppelt. Auf diese Weise kann die relative Position der Reibrührmodule und der Schultern durch Verdrehung der zentralen Achse oder der betreffenden Bauteile verstellt werden. Gleichzeitig erfolgt über die zentrale Achse der Drehantrieb der Reibrührmodule und der Schultern zum Reibrührverschweißen von gegeneinander stoßenden Blechbauteilen.

Typischerweise sind Paneelelemente, für deren Verschweißung ein erfindungsgemäßes Werkzeug besonders geeignet ist und aus denen sich durch Anwendung eines erfindungsgemäßen Verfahrens großflächige Paneele herstellen lassen, aus einem Leichtmetallwerkstoff gefertigt und werden auf Stoß gefügt. Gerade zwischen aneinanderstoßenden Paneelelementen kann eine Schweißverbindung besonders schnell und wirtschaftlich durch Reibrührschweißen hergestellt werden.

Hierbei ergibt sich eine besondere Herausforderung dann, wenn die Paneelelemente an ihren im gefügten Zustand gegeneinander stoßenden Seitenflächen kanalartige Ausnehmungen aufweisen, die, wenn die Paneelelemente auf Stoß gefügt sind, einen Tunnel bilden, der bei horizontaler Ausrichtung der Paneelelemente an seiner Ober- und seiner Unterseite jeweils durch einen seitlich von den Paneelelementen abstehenden Materialabschnitt begrenzt und als solcher von der Ober- und Unterseite der Paneelelemente her unzugänglich ist.

Bei derart gestalteten Paneelelementen lässt sich mit konventionellen Reibrührwerkzeugen, die bezogen auf eine horizontale Ausrichtung der Paneelelemente jeweils nur von der freien Ober- oder Unterseite her gegen die auf Stoß gefügten, miteinander zu verschweißenden Paneelelemente wirken, keine ordnungsgemäße Verschweißung gewährleisten. So fehlt beim Einsatz von derart konventionellen Werkzeugen, die nur von einer Außenseite her an die Paneelelemente angesetzt werden können, ein Gegenlager, welches sicherstellt, dass das Material der reibrührbearbeiteten Materialabschnitte der Paneelelemente in einem für eine ordnungsgemäße Verschweißung ausreichenden Maße erwärmt wird und sich infolgedessen die Materialien der Paneelelemente im Bereich der Schweißzone ausreichend vermischen.

Um dieses Problem zu lösen und beim Verschweißen von Paneelelementen der voranstehend erläuterten Art eine glatte Schweißnaht mit ebenen Oberflächen zu erhalten, ist in der JP 2004/042115 A die Verwendung von spulenartigen Reibrührwerkzeugen vorgeschlagen worden, bei denen auf einer zentralen Achse jeweils eine Reibschulter und, in Achsrichtung beabstandet dazu, eine Stützschulter angeordnet ist. Der Abstand zwischen der Stützschulter und der Reibschulter ist dabei so eingestellt, dass sie der Dicke der in der Fügezone zwischen den Paneelelementen aufeinanderstoßenden, den Tunnel zwischen den Paneelelementen begrenzenden Materialabschnitte entspricht. Im Schweißbetrieb bildet die zentrale Achse des Werkzeugs den Schweißstift, der entlang der Fügenaht zwischen den miteinander zu verschweißenden Materialabschnitte der Paneelelemente geführt wird. Da die Reibschulter und die Stützschulter jeweils drehfest mit der zentralen Achse verbunden sind, werden über die während des Schweißbetriebs auf der freien Oberseite der aneinanderstoßenden Materialabschnitte der Paneelelemente aufsitzenden Reibschulter einerseits und durch die an der dem Tunnel zwischen den Paneelelementen zugeordneten Fläche der Materialabschnitte anliegende Stützschulter andererseits Reibwärme erzeugt. Um eine optimale Abstützung während des Schweißvorgangs zu gewährleisten, ist die von der Stützschulter ausgeübte Anpresskraft größer als die von der Reibschulter gegen die freie Oberfläche der Seite. Indem in dieser Art jeweils ein in der voranstehend erläuterten Weise gestaltetes Werkzeug entlang der bei horizontaler Ausrichtung der miteinander zu verschweißenden Paneelelemente oberen Fügenaht und entlang der bei dieser Ausrichtung unten liegenden Fügenaht bewegt wird, lassen sich die Paneelelemente in einem Zug miteinander verschweißen, obwohl der im Bereich der aneinanderstoßenden Seitenflächen gebildete Tunnel über seine Länge unzugänglich ist.

Vor dem Hintergrund des voranstehend erläuterten Standes der Technik hat sich die Aufgabe ergeben, ein Werkzeug für das Reibrührschweißen zu schaffen, welches es mit vermindertem Aufwand ermöglicht, zwei auf Stoß gefügte Paneelelemente durch Reibrührschweißen miteinander zu verbinden, bei denen im Bereich der aneinanderstoßenden Seitenflächen durch in die betreffenden Seitenflächen kanalartig eingeformte Ausnehmungen ein Tunnel gebildet ist.

Darüber hinaus sollte ein Verfahren angegeben werden, welches auf einfache Weise erlaubt, derart ausgebildete und auf Stoß gefügte Paneelelemente reibrührzuverschweißen.

Die Erfindung hat diese Aufgabe durch ein Werkzeug, das mindestens die in Anspruch 1 genannten Merkmale aufweist, und ein Verfahren gelöst, das mindestens die in Anspruch 10 angegebenen Verfahrensschritte umfasst.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes Werkzeug zum Reibrührschweißen umfasst demnach in Übereinstimmung mit dem eingangs erläuterten Stand der Technik
- eine zentrale Achse, die stiftartig ausgebildet und zum Ankoppeln an eine Antriebseinrichtung vorgesehen ist,
- eine erste Reibschulter, die von der zentralen Achse getragen ist,
- eine zweite Reibschulter, die in Längsrichtung der zentralen Achse in einem Abstand zu der ersten Reibschulter von der zentralen Achse getragen ist,
- zwei von der zentralen Achse getragene Stützschultern, die zwischen den Reibschultern angeordnet sind und von denen mindestens eine auf der zentralen Achse axial verschiebbar gelagert ist,
   und
- eine Stelleinrichtung, die zwischen den Stützschultern angeordnet und dazu eingerichtet ist, im Gebrauch mindestens auf die axial verschiebbare Stützschulter eine Kraft auszuüben, welche in Richtung der zu der axial verschiebbaren Stützschulter jeweils nächstbenachbart angeordneten Reibschulter gerichtet ist.

Erfindungsgemäß umfasst nun die Stelleinrichtung ein Stellglied, das im Gebrauch durch die dann wirkenden Fliehkräfte in radialer Richtung nach außen weg von der zentralen Achse des Werkzeugs getrieben wird und dabei gegen eine an der jeweiligen Stützschulter ausgebildete Schrägfläche wirkt.

Die erfindungsgemäß vorgesehene Stelleinrichtung ist somit nach Art einer Fliehkraftkupplung ausgebildet und wirkt in Abhängigkeit von der Drehzahl des Werkzeugs. Hierzu umfasst die Stelleinrichtung ein Stellglied, das im Gebrauch durch die auf dieses Stellglied wirkenden Fliehkräfte in radialer Richtung nach außen weg von der zentralen Achse des Werkzeugs getrieben wird und dabei gegen eine an der jeweiligen Stützschulter ausgebildete Schrägfläche wirkt. Die Radialbewegung des Stellglieds wird so in eine gegen die zu ihm nächstbenachbarte Reibschulter gerichtete Axialbewegung umgelenkt. Auf diese Weise werden aus den hohen Drehzahlen, mit der Reibrührwerkzeuge der hier in Rede stehenden Art im Gebrauch betrieben werden, hohe Andruckkräfte erzeugt, die sich günstig auf den Schweißverlauf und das Schweißergebnis der Reibrührverschweißung auswirken..

Im praktischen Gebrauch dient die zentrale Achse eines erfindungsgemäßen Werkzeugs als Schweißstift, durch den über die Höhe der zwischen den aneinanderstoßenden Paneelelementen vorhandenen Fügenähte durch Reibung so viel Wärme eingetragen wird, dass das Material im Bereich der Fügezone zwischen den Paneelelementen aufweicht, sich vermischt und so eine intensive stoffschlüssige Verbindung eingeht, durch die nach dem Erstarren die Paneelelemente fest miteinander verbunden sind. Dabei trägt die zentrale Achse zwei Stützschultern, die sich im Gebrauch in dem zwischen den miteinander zu verschweißenden Paneelelementen vorhandenen Tunnel befinden und von dort aus die Materialabschnitte, die den Tunnel bei horizontaler Ausrichtung der Paneelelemente an seiner Ober- und Unterseite begrenzen, während der Reibrührverschweißung stützen. Die Stützkraft wird dabei über eine Stelleinrichtung erzeugt, die zwischen den Stützschultern angeordnet ist und im Gebrauch mindestens eine Stützschulter, welche axial beweglich an der zentralen Achse gelagert ist, gegen die dem Tunnel zugewandte Fläche des ihr zugeordneten Materialabschnitts drückt. Auf diese Weise ist unabhängig von der jeweiligen Materialstärke des betreffenden Materialabschnitts und ohne aufwändige Einstellarbeiten sichergestellt, dass die axial verschiebbare Stützschulter den ihr zugeordneten Materialabschnitt mit der jeweils erforderlichen Anpresskraft stützt.

Die zweite Schulter kann in ihrer Achsstellung an der zentralen Achse so fixiert sein, dass sie mit fest eingestellter Anpresskraft vom Tunnel aus gegen den jeweils anderen Materialabschnitt drückt und auf diese Weise eine ausreichende Stützwirkung entfaltet.

Als besonders praxisgerecht erweist sich hier jedoch eine Ausgestaltung des erfindungsgemäßen Werkzeugs, bei der beide Stützschultern axial verschiebbar an der zentralen Achse gelagert und im Gebrauch jeweils mittels einer Stelleinrichtung in Richtung der zu ihnen jeweils nächstbenachbart angeordneten Reibschulter mit einer Kraft belastet sind. Bei einem derart ausgestalteten Werkzeug entfällt jeglicher Justageaufwand für die Einstellung der von den Stützschultern aufgebrachten Anpresskräfte. Stattdessen wirken die Stützschultern jeweils mit einer definierten, durch die jeweilige Stelleinrichtung erzeugten Kraft gegen die dem Tunnel zugewandte Fläche des ihnen jeweils zugeordneten Materialabschnitts. Als besonders günstig erweist sich dabei die elastisch federnde Kraftbeaufschlagung, da auf diese Weise Variationen der Dicke der miteinander zu verschweißenden Materialabschnitte der Paneelelemente ohne weiteres ausgeglichen werden.

Wie schon erwähnt, dient die zentrale Achse im Gebrauch als Reibrührstift, über den die erforderliche Wärmeenergie durch Reibung in das Material eingebracht wird, das die jeweilige Fügenaht zwischen den miteinander zu verschweißenden Paneelelementen seitlich begrenzt. Die zentrale Achse kann zu diesem Zweck an ihren Umfangflächen mit einer Oberflächenstruktur versehen sein, die die Reibung zwischen dem mit der zentralen Achse in Kontakt kommenden Material der reibrührzuverschweißenden Paneelelemente erhöht. Ebenso kann die Formgebung der zentralen Achse so gewählt werden, dass ein optimaler Energieeintrag in das betreffende Material erzielt wird. Hierzu kann die zentrale Achse eine von einem Kreis abweichende Querschnittsform aufweisen. So sind beispielsweise vieleckige Querschnitte, insbesondere drei- oder mehreckige Querschnitte denkbar, so dass an der Umfangsfläche der Achse Kanten ausgebildet sind, die nicht nur die Reibung zwischen dem Material der zu verschweißenden Paneele erhöhen, sondern gegebenenfalls auch für eine drehfeste Ankopplung der Stütz- oder Reibschultern an die zentrale Achse genutzt werden können.

Dabei muss die zentrale Achse nicht notwendig aus einem Stück gefertigt sein. Vielmehr ist es auch möglich, die zentrale Achse aus zwei oder mehr einzelnen Bauteilen zusammenzusetzen. Dies kann den Vorteil haben, dass die betreffenden Bauteile entsprechend ihrer Funktion geformt sein können. So kann beispielsweise in dem Bereich, in dem die zentrale Achse mit dem Material der die Fügenähte begrenzenden Materialabschnitte in Berührung kommt, die zentrale Achse eine besondere Oberflächenstruktur oder besondere mechanische Eigenschaften aufweisen, während sie in dem Bereich, in dem die Stützschultern axial verschiebbar sind, in einer für diesen Zweck optimalen Weise ausgestaltet sein kann. Dabei können die einzelnen Abschnitte der zentralen Achse aus einzelnen Bauteilen gebildet sein, die ihren jeweiligen Funktionen entsprechende Eigenschaften oder Formgebungen besitzen.

Auch bei einem erfindungsgemäßen Werkzeug kann für den Eintrag maximaler Reibungswärme in die Fügezone, in der die Schweißverbindung ausgebildet werden soll, zweckmäßig sein, mindestens eine der Stützschultern drehfest mit der zentralen Achse zu verkoppeln.

Aus denselben Gründen kann es zweckmäßig sein, mindestens eine der Reibschultern drehfest mit der zentralen Achse zu verkoppeln.

Jedoch können sich auch Einsatzfälle ergeben, bei denen es aus den schon aus dem eingangs diskutierten Stand der Technik bekannten Gründen sinnvoll ist, die Stützschultern oder die Reibschultern von der Drehbewegung der zentralen Achse zu entkoppeln, so dass die jeweils drehentkoppelte Stützschulter oder Reibschulter im Gebrauch keine Drehung um die Längsachse der zentralen Achse ausführt.

Insbesondere dann, wenn die Stütz- oder Reibschultern von der Drehbewegung der zentralen Achse entkoppelt sind, können die Stütz- oder Reibschultern auch nach Art eines schuhförmigen Absatzes oder desgleichen ausgebildet sein, um eine großflächige Abstützung oder Reibbelastung der Fügezone zwischen den miteinander zu verschweißenden Paneelelementen zu bewirken. Auch ist es möglich, mindestens eine der Stützschultern so auszubilden, dass die betreffende Stützschulter an den seitlichen Begrenzungsflächen des zwischen den aneinanderstoßenden Paneelelementen gebildeten Tunnels geführt und auf diese Weise die zentrale Achse abgestützt ist.

Eine optimale Belastungsverteilung ergibt sich bei einem erfindungsgemäßen Werkzeug im Gebrauch dann, wenn die Reibschultern, die Stützschultern und das mindestens eine elastisches Element koaxial in Bezug auf die zentrale Achse ausgerichtet sind. Dies gilt insbesondere dann, wenn mindestens eine der Reibschultern oder der Stützschultern drehfest mit der zentralen Achse verbunden ist.

Ebenso erweist es sich im Fall, dass mindestens eine der Reibschultern oder der Stützschultern drehfest mit der zentralen Achse verbunden ist, als günstig, wenn die mit dem Material der Paneelelemente in Kontakt kommenden Stirnflächen der Reibschultern oder der Stützschultern ringscheibenförmig sind und die zentrale Achse durch das Zentrum der so geformten Stirnflächen geführt ist.

Den voranstehenden Erläuterungen zum erfindungsgemäßen Werkzeug entsprechend umfasst das erfindungsgemäße Verfahren zum Herstellen von Paneelen, die aus zwei aus verschweißbarem Werkstoff vorgefertigten Paneelelementen zusammengesetzt sind, die an einander zugeordneten Seitenflächen jeweils eine kanalartig sich längs der betreffenden Seitenfläche erstreckende Ausnehmung aufweisen, folgende Arbeitsschritte:
- Bereitstellen der zwei Paneelelemente;
- Fügen der Paneelelemente derart, dass ihre mit den kanalartigen Ausnehmungen versehenen Seitenflächen in einer Fügezone gegeneinander, insbesondere stumpf gegeneinander, stoßen und in der Fügezone durch die kanalartigen Ausnehmungen ein sich längs der Fügezone erstreckender Tunnel gebildet ist, der bei horizontaler Ausrichtung der Paneelelemente an seiner Ober- und seiner Unterseite jeweils durch stegartig seitlich von dem jeweiligen Paneelelement abstehende Materialabschnitte der Paneelelemente begrenzt ist, von denen die der Oberseite zugeordneten Materialabschnitte in einer ersten Fügenaht und die der Unterseite zugeordneten Materialabschnitte in einer zweiten Fügenaht gegeneinander stoßen,
- Reibrührverschweißen der Paneelelemente, indem ein ausgebildetes Werkzeug mit seiner als Rührstift wirkenden zentralen Achse entlang der Fügenähte zwischen den Paneelelementen geführt wird, wobei die eine Reibschulter auf die freie Oberfläche an der Oberseite und die andere Reibschulter auf die freie Oberfläche an der Unterseite wirken und mindestens eine der Stützschultern elastisch gegen die dem Tunnel zugewandte Fläche von zwei aneinander stoßenden Materialabschnitte der Paneelelemente gedrückt wird.

Im Fall, dass die Stützschultern drehfest mit der zentralen Achse verkoppelt sind, werden während des Reibrührverschweißens die Materialabschnitte der aneinanderstoßenden und miteinander zu verschweißenden Paneelelemente jeweils sowohl von ihrer freien, vom Tunnel zwischen den Paneelelementen abgewandten Außenfläche als auch von ihrer dem Tunnel zugwandten Fläche her reibrührbelastet.

Ein erfindungsgemäßes Werkzeug und ein erfindungsgemäßes Verfahren eignen sich in besonderer Weise zum Reibrührverschweißen von Paneelelementen, die aus einem Leichtmetallwerkstoff, insbesondere einem Aluminiumwerkstoff, bestehen.

Nachfolgend wird die Erfindung anhand einer ein Ausführungsbeispiel darstellenden Zeichnung näher erläutert. Es zeigen jeweils schematisch:
- Fig. 1: ein dem Stand der Technik entsprechendes Werkzeug beim Verschweißen von zwei horizontal ausgerichteten Paneelelementen im Querschnitt;
- Fig. 2: die für das Verschweißen bereitgestellten Paneelelemente in horizontaler Ausrichtung in einer der Fig. 1 entsprechenden Ansicht;
- Fig. 3: die Paneelelemente gemäß Fig. 1 und 2 in auf Stoß gefügtem Zustand in einer der Fig. 1 entsprechenden Ansicht;
- Fig. 4: die Paneelelemente gemäß den Fig. 1 bis 3 bei der Reibrührverschweißung mittels des in Fig. 1 dargestellten Werkzeugs in einer den Fig. 1 bis 3 entsprechenden Ansicht;
- Fig. 5: ein erfindungsgemäßes Werkzeug in einer der Fig. 1 entsprechenden Darstellung.

Die Paneelelemente 1,2 sind in konventioneller Weise beispielsweise durch Strangpressen als Hohlkammerprofile aus einem hierzu aus dem Stand der Technik bekannten Aluminiumwerkstoff vorgefertigt. In die Seitenflächen ihrer Längsseiten 3,4 sind jeweils kanalartige Ausnehmungen 5,6 eingeformt, die sich über die Länge der jeweiligen Längsseite 3,4 erstrecken und die bei der in den Figuren gewählten horizontalen Ausrichtung an ihrer oberen und unteren Seite jeweils durch einen Materialabschnitt 7a,7b,8a,8b des jeweiligen Paneeielements 1,2 begrenzt sind. Die Basis der kanalartigen Ausnehmungen 5,6 ist dabei durch die der jeweiligen Längsseite 3,4 zugeordneten Seitenflächen von jeweils einem Steg 9,10 des jeweiligen Paneelelements 1,2 gebildet, so dass die Ausnehmungen 5,6 eine U-förmige Querschnittsform besitzen.

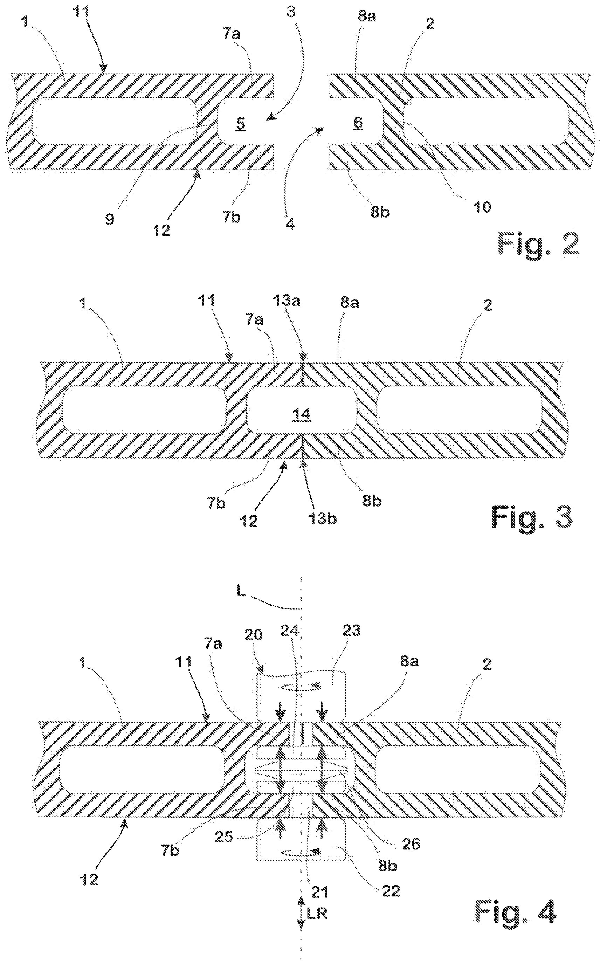

Zum Verschweißen werden die Paneelelemente 1,2 auf Stoß gefügt (Fig. 3), indem ihre Längsseiten 3,4 aneinanderstoßend so ausgerichtet werden, dass die Außenflächen 11,12 der Paneelelemente 1,2 in einer Ebene liegen und sich die Stirnflächen ihrer bei horizontaler Ausrichtung der Paneelelemente 1,2 oberen Materialabschnitte 7a,8a in einer oberen Fügenaht 13a und ihre unteren Materialabschnitte 7b,8b in einer unteren Fügenaht 13b berühren.

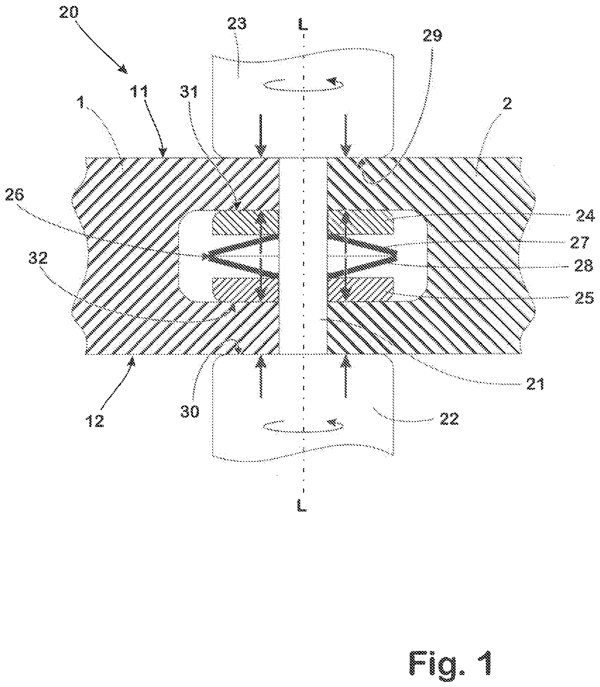

Die Ausnehmungen 5,6 der Paneelelemente 1,2 bilden zwischen den in dieser Weise aneinanderstoßenden Paneelelementen 1,2 einen Tunnel 14, der bei der in den Figuren 1 - 4 gewählten horizontalen Ausrichtung an seiner Oberseite durch die Materialabschnitte 7a,8a und an seiner Unterseite durch die Materialabschnitte 7b,8b der Paneelelemente 1,2 begrenzt ist,

Das in Fig. 1 und 4 dargestellte, dem eingangs erörterten Stand der Technik entsprechende Werkzeug 20 zum Reibrührverschweißen weist eine nach Art eines bei konventionellen Reibrührwerkzeugen vorgesehenen Schweißstifts ausgebildete zentrale Achse 21 auf, die an einen hier nicht gezeigten, konventionell ausgebildeten Drehantrieb angekoppelt ist. Der nicht gezeigte Drehantrieb treibt die zentrale Achse 21 um ihre Längsachse L rotierend an.

Am unteren Ende der zentralen Achse 21 ist eine erste Reibschulter 22 in drehfester Verbindung mit der zentralen Achse 21 gehalten. Eine zweite Reibschulter 23 ist in Längsrichtung der zentralen Achse 21 versetzt ebenfalls in drehfester Verbindung an der zentralen Achse 21 gehalten. Dabei ist die zweite Reibschulter 23 mit einer hier nicht gezeigten lösbaren Stelleinrichtung ausgestattet, mittels derer die Position der Reibschulter 23 an der zentralen Achse 21 fixiert ist. Nach Lösen ihrer Stelleinrichtung kann die Reibschulter 23 in Längsrichtung LR der zentralen Achse 21 verstellt werden.

Zwischen den beiden Reibschultern 22,23 sind zwei Stützschultern 24,25 an der zentralen Achse 21 angeordnet. Die Stützschultern 24,25 sind dabei in Längsrichtung LR verschiebbar und in drehfester Verbindung an der zentralen Achse 21 gelagert.

Die Stützschultern 24,25 sind bei dem in Fig. 1 und 4 dargestellten, dem Stand der Technik entsprechenden Werkzeug durch eine zwischen ihnen angeordnete Stelleinrichtung 26, die als elastisches Element ausgebildet ist, in Richtung der zu ihnen jeweils nächstbenachbarten Reibschulter 22,23 mit einer elastischen Kraft belastet. Die Stelleinrichtung 26 ist dazu durch ein Paket von Tellerfedern 27,28 gebildet, die so gegeneinander ausgerichtet sind, dass die Stützschulter 24 in Richtung der Reibschulter 22 und die Stützschulter 25 in Richtung der Reibschulter 23 gedrückt wird.

Die Reibschuitern 22,23, die Stützschultern 24,25 und die die Stelleinrichtung 26 bildenden Tellerfedern 27,28 sind koaxial zur zentralen Achse 21 ausgerichtet und jeweils so geformt, dass die zentrale Achse 21 durch sie hindurch geführt werden kann. An den einander zugeordneten Stirnflächen der Reibschultern 22,23 und der Stützschultern 24,25 sind dementsprechend ringförmige ebene Anlageflächen 29,30,31,32 gebildet, durch deren Zentrum die zentrale Achse 21 verläuft.

Zum Start der Reibrührverschweißung wird das Werkzeug 20 an einem seitlich offenen Ende des Tunnels 14 so positioniert und eingerichtet, dass bei horizontaler Ausrichtung der auf Stoß gefügten Paneelelemente 1,2, seine erste Reibschulter 23 an der bei horizontaler Ausrichtung der Paneelelemente 1,2 unteren Außenfläche 12 der Paneelelemente 1,2 und die obere Reibschulter 22 auf der oberen Außenfläche 11 der Paneelelemente 1,2 sitzt. Gleichzeitig sitzen die Stützschultern 24,25 in dem Tunnel 14 und werden von der Stelleinrichtung 26 gegen die ihnen jeweils zugeordneten, dem Tunnel 14 zugewandten Flächen der Materialabschnitte 7a,8a und 7b,8b gedrückt,

Anschließend wird das Werkzeug 20 mittels des mit seiner zentralen Achse 21 verkoppelten Drehantriebs um seiner Längsachse L rotierend und in einer kontinuierlichen Vorwärtsbewegung längs der Fügenähte 13a, 13b angetrieben. Die nun in das Material der in den Fügenähten 13a, 13b aneinander stoßenden Materialabschnitte 7a,8a;7b,8b eintauchende zentrale Achse 21 wirkt als Schweißstift, durch dessen Rotation und der damit einhergehenden Reibung so viel Wärme in das betreffende Material eingebracht wird, dass diese aufweicht, sich vermischt und, nachdem das Werkzeug 20 weiterbewegt worden ist, sich wieder verfestigt, so dass die Paneelelemente 1,2 miteinander unlösbar stoffschlüssig schweißverbunden sind, Die Stützschultern 24,25 stützen dabei die Materialabschnitte 7a,8a;7b,8b und stellen sicher, dass sich in den Fügenähten 13a, 13b über die gesamte Dicke der in ihnen zusammenstoßenden Materialabschnitte 7a,8a;7b,8b eine ordnungsgemäße Materialvermischung ergibt. Gleichzeitig gewährleisten die Stützschultern 24,25 genauso wie die Reibschultern 22,23 an der jeweiligen Außenfläche 11,12 der Paneelelemente 1,2, dass sich eine optimal ebene Schweißnaht an der dem Tunnel 14 zugeordneten Seite der Materialabschnitte 7a,8a,7b,8b ergibt.

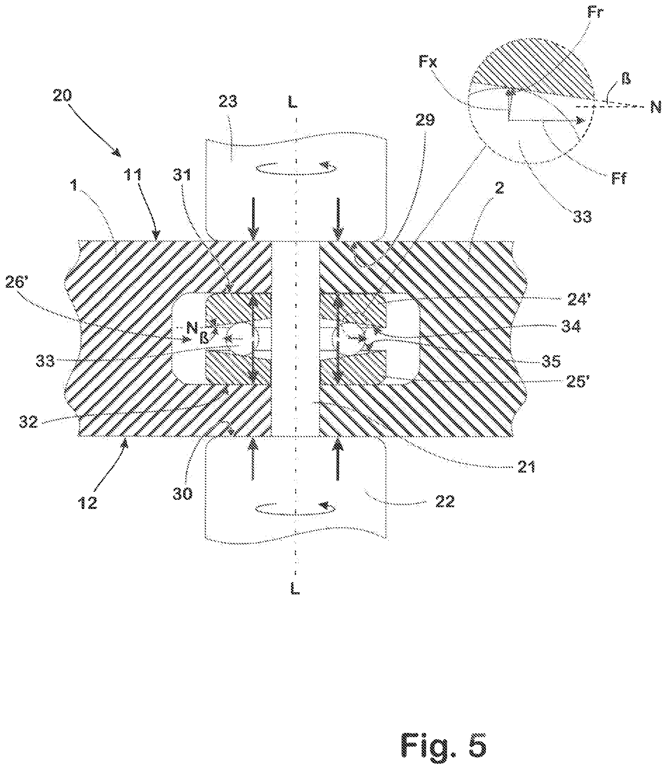

Die in Fig. 5 dargestellte erfindungsgemäße Ausgestaltung eines Werkzeugs 20' zum Reibrührschweißen unterscheidet sich von dem Werkzeug 20 hinsichtlich der Ausgestaltung seiner Stelleinrichtung 26' und seiner Stützschultern 24',25'. Sämtliche Bauteile des Werkzeugs 20', die mit den korrespondierenden Bauteilen des Werkzeugs 20 hinsichtlich ihrer Gestaltung und Funktion übereinstimmen, sind daher mit den Bezugszeichen versehen, die schon beim Werkzeug 20 verwendet worden sind.

Beim Werkzeug 20' ist die Stelleinrichtung 26' durch Kugeln 33 gebildet, die lose zwischen den Stützschultern 24',25' angeordnet sind. Dabei sind die im Übrigen wie die Stützschultern 24,25 geformten Stützschultern 24',25' an ihrer Unterseite mit einer kegelförmig angeschrägt umlaufenden Schrägfläche 34,35 versehen. Diese fällt bei der oberen Stützschulter 24' die Schrägfläche 34 ausgehend von ihrem der zentralen Achse 21 zugeordneten inneren Rand in radialer Richtung bis zu ihrem äußeren Rand unter einem auf die Normale N zur zentralen Achse 21 bezogenen Winkel β ab, wogegen die Schrägfläche 35 bei der unteren Stützschulter 25' ausgehend von deren der zentralen Achse 21 zugeordneten inneren Rand in radialer Richtung bis zu deren äußeren Rand ebenfalls unter dem Winkel β ansteigt.

Im Gebrauch rotieren die mit der zentralen Achse 21 drehfest verbundenen Stützschultern 24',25' und mit ihnen die Kugeln 33 mit hoher Drehzahl, so dass die lose zwischen den Stützschultern 24',25' sitzenden Kugeln 33 in Folge der dabei wirkenden Fliehkräfte Ff entlang der Schrägflächen 34,35 in radialer Richtung nach außen getrieben werden. Demzufolge üben die Kugeln 33 auf die Schrägflächen 34,35 eine resultierende Kraft Fres aus, die sich aus der Fliehkraft Fr und einer achsparallel zur zentralen Achse 21 ausgerichteten Kraft Fx ergibt, für die gilt Fx = Ff × sin(ß) × cos(ß). In Folge der im Gebrauch auftretenden Fliehkräfte Ff werden die Stützschultern 24',35' somit mit der achsparallel zur zentralen Achse 21 wirkenden Kraft Fx gegen die ihnen jeweils zugeordnete, dem Tunnel 14 zugewandte Fläche der Materialabschnitte 7a,8a;7b,8b gedrückt und stützen so die Materialabschnitte 7a,8a;7b,8b während des Schweißvorgangs.

### BEZUGSZEICHEN

- 1,2: Paneelelemente
- 3,4: Längsseiten der Paneelelemente 1,2
- 5,6: Ausnehmungen der Paneelelemente 1,2
- 7a,7b: bei horizontaler Ausrichtung obere Materialabschnitte der Paneelelemente 1,2
- 8a,8b: bei horizontaler Ausrichtung untere Materialabschnitte der Paneelelemente 1,2
- 9,10: Stege der Paneelelemente 1,2
- 11,12: Außenfläche der Paneelelemente 1,2
- 13a, 13b: Fügenähte
- 14: durch die Ausnehmungen 5,6 gebildeter Tunnel
- 20,20': Werkzeuge zum Reibrührverschweißen der Paneelelemente 1,2
- 21: zentrale Achse der Werkzeuge 20,20'
- 22,23: Reibschultern der Werkzeuge 20,20'
- 24,25: Stützschultern des Werkzeugs 20
- 24',25': Stützschultern des Werkzeugs 20'
- 26: Stelleinrichtung des Werkzeugs 20
- 26': Stelleinrichtung des Werkzeugs 20'
- 27,28: Tellerfedern der Stelleinrichtung 26
- 29-32: Anlageflächen der Stützschultern 24,25 und der Reibschultern 22,23
- 33: Kugeln der Stelleinrichtung 26'
- 34,35: Schrägfläche Stützschultern 24',25'

- ß: Winkel zwischen den Schrägflächen 34,35 und der Normale N
- Ff: in radialer Richtung bezogen auf die zentrale Achse ausgerichtete, auf die Kugeln 33 im Gebrauch wirkende Fliehkräfte
- Fx: in axialer Richtung auf die Stützschultern 24',25' im Gebrauch wirkende Kräfte
- Fres: von den Kugeln 33 im Gebrauch auf die Schrägflächen 34,35 ausgeübte Kraft
- L: Längsachse der zentralen Achse 21
- LR: Längsrichtung der zentralen Achse 21
- N: Normale zur zentralen Achse 21

## Patentansprüche

1. Werkzeug zum Reibrührschweißen
- mit einer zentralen Achse (21), die stiftartig ausgebildet und zum Ankoppeln an eine Antriebseinrichtung vorgesehen ist,
- mit einer ersten Reibschulter (22), die von der zentralen Achse (21) getragen ist,
- mit einer zweiten Reibschulter (23), die in Längsrichtung (LR) der zentralen Achse (21) in einem Abstand zu der ersten Reibschulter (22) von der zentralen Achse (21) getragen ist,
- mit zwei von der zentralen Achse (21) getragene Stützschultern (24',25'), die zwischen den Reibschultern (22,23) angeordnet sind und von denen mindestens eine auf der zentralen Achse (21) axial verschiebbar gelagert ist, und
- mit einer Stelleinrichtung (26'), die zwischen den Stützschultern (24',25') angeordnet und dazu eingerichtet ist, im Gebrauch mindestens auf die axial verschiebbare Stützschulter (24',25') eine Kraft auszuüben, welche in Richtung (LR) der zu der axial verschiebbaren Stützschulter (24',25') jeweils nächstbenachbart angeordneten Reibschulter (22,23) gerichtet ist,
**dadurch gekennzeichnet, dass** die Stelleinrichtung (26') ein Stellglied (33) umfasst, das im Gebrauch durch die dann wirkenden Fliehkräfte (Ff) in radialer Richtung nach außen weg von der zentralen Achse (21) des Werkzeugs (20') getrieben wird und dabei gegen eine an der jeweiligen Stützschulter (24',25') ausgebildete Schrägfläche (34,35) wirkt.

2. Werkzeug nach Anspruch 1, **dadurch gekennzeichnet, dass** beide Stützschultern (24',25') axial verschiebbar an der zentralen Achse (21) gelagert und im Gebrauch jeweils mittels der Stelleinrichtung (26') in Richtung (LR) der zu ihnen jeweils nächstbenachbart angeordneten Reibschulter (22,23) mit einer Kraft belastet sind.

3. Werkzeug nach Anspruch 2, **dadurch gekennzeichnet, dass** die Stützschultern (24',25') gemeinsam durch die zwischen ihnen angeordnete Stelleinrichtung (26') im Gebrauch mit der gegen die jeweils nächstbenachbart angeordnete Reibschulter (22,23) gerichteten Kraft belastet sind.

4. Werkzeug nach einem der voranstehenden Ansprüche, **dadurch gekennzeichnet, dass** die zentrale Achse (21) eine von einem Kreis abweichende Querschnittsform aufweist, insbesondere einen vieleckigen Querschnitt.

5. Werkzeug nach einem der voranstehenden Ansprüche, **dadurch gekennzeichnet, dass** die zentrale Achse (21) aus zwei oder mehr Teilen zusammengesetzt ist, die drehfest miteinander verkoppelt sind.

6. Werkzeug nach einem der voranstehenden Ansprüche, **dadurch gekennzeichnet, dass** mindestens eine der Stützschultern (24',25') drehfest mit der zentralen Achse (21) verkoppelt ist.

7. Werkzeug nach einem der voranstehenden Ansprüche, **dadurch gekennzeichnet, dass** mindestens eine der Reibschultern (22,23) drehfest mit der zentralen Achse (21) verkoppelt ist.

8. Werkzeug nach einem der Ansprüche 1 bis 5, **dadurch gekennzeichnet, dass** die Stützschultern (24',25') oder die Reibschultern (22,23) von der Drehbewegung der zentralen Achse (21) entkoppelt sind.

9. Werkzeug nach einem der voranstehenden Ansprüche, **dadurch gekennzeichnet, dass** die Reibschultern (22,23), die Stützschultern (24',25') und die Stelleinrichtung (26') koaxial in Bezug auf die zentrale Achse (21) ausgerichtet sind.

10. Werkzeug nach einem der voranstehenden Ansprüche, **dadurch gekennzeichnet, dass** die einander zugewandten Stirnflächen (29,30) der Reibschultern (22,23) ringförmig sind.

11. Werkzeug nach einem der voranstehenden Ansprüche, **dadurch gekennzeichnet, dass** die Stützschultern (24',25') ringscheibenförmig sind.

12. Verfahren zum Herstellen von Paneelen, die aus zwei aus verschweißbarem Werkstoff vorgefertigten Paneelelementen (1,2) zusammengesetzt sind, die an einander zugeordneten Seitenflächen jeweils eine kanalartig sich längs der betreffenden Seitenfläche erstreckende Ausnehmung (5,6) aufweisen, umfassend folgende Arbeitsschritte:
- Bereitstellen der zwei Paneelelemente (1,2);
- Fügen der Paneelelemente (1,2) derart, dass ihre mit den kanalartigen Ausnehmungen (5,6) versehenen Seitenflächen gegeneinander stoßen und durch die kanalartigen Ausnehmungen (5,6) ein Tunnel (14) gebildet ist, der bei horizontaler Ausrichtung der Paneelelemente (1,2) an seiner Ober- und seiner Unterseite jeweils durch stegartig seitlich von dem jeweiligen Paneelelement (1,2) abstehende Materialabschnitte (7a,7b;8a,8b) der Paneelelemente (1,2) begrenzt ist, von denen die der Oberseite zugeordneten Materialabschnitte (7a,8a) in einer ersten Fügenaht (13a) und die der Unterseite zugeordneten Materialabschnitte (7a,7b) in einer zweiten Fügenaht (13b) gegeneinander stoßen;
- Reibrührverschweißen der Paneelelemente (1,2), indem ein gemäß einem der voranstehenden Ansprüche ausgebildetes Werkzeug (20') mit seiner als Schweißstift wirkenden zentralen Achse (21) entlang der Fügenähte (13a,13b) zwischen den Paneelelementen (1,2) geführt wird, wobei die eine Reibschulter (22) auf die freie Oberfläche (11) an der Oberseite und die andere Reibschulter (23) auf die freie Oberfläche (12) an der Unterseite der Paneelelemente (1,2) wirken und wobei die Stützschultern (24',25') in dem Tunnel (14) angeordnet sind und mindestens eine der Stützschultern (24',25') von der Stelleinrichtung (26') gegen die dem Tunnel (14) zugewandte Fläche von zwei aneinander stoßenden Materialabschnitten (7a,8a;7b,8b) der Paneelelemente (1,2) gedrückt wird.

13. Verfahren nach Anspruch 12, **dadurch gekennzeichnet, dass** die Stützschultern (24',25') drehfest mit der zentralen Achse (21) verkoppelt sind, so dass während des Reibrührverschweißens die Materialabschnitte (7a,8a;7b,8b) jeweils sowohl von ihrer freien, vom Tunnel (14) zwischen den Paneelelementen (1,2) abgewandten Außenfläche (11,12) als auch von ihrer dem Tunnel (14) zugewandten Fläche her reibrührbelastet werden.

14. Verfahren nach Anspruch 12 oder 13, **dadurch**
**gekennzeichnet, dass** die Paneelelemente (1,2) aus einem Leichtmetallwerkstoff bestehen.

## Claims

1. Tool for friction stir welding
- with a central shaft (21), which is pin-shaped and is provided for coupling to a drive device,
- with a first friction shoulder (22), which is carried by the central shaft (21),
- with a second friction shoulder (23), which is carried by the central shaft (21) in the longitudinal direction (LR) of the central shaft (21) at a distance from the first friction shoulder (22),
- with two support shoulders (24', 25') carried by the central shaft (21), which are arranged between the friction shoulders (22, 23) and of which at least one is mounted axially displaceably on the central shaft (21), and
- with an actuation device (26'), which is arranged between the support shoulders (24',25') and configured to exert, in use, at least on the axially displaceable support shoulder (24', 25'), a force which is directed in the direction (LR) of the friction shoulder (22, 23) arranged in each case next adjacent to the axially displaceable support shoulder (24', 25'),
**characterised in that** the actuation device (26') comprises an actuator (33) which, in use, is driven radially outwards away from the central shaft (21) of the tool (20') by the centrifugal forces (Ff) then acting and, in so doing, acts against an inclined surface (34, 35) formed on the respective support shoulder (24', 25').

2. Tool according to claim 1, **characterized in that** both support shoulders (24', 25') are mounted axially displaceably on the central shaft (21) and, in use, are each loaded with a force by means of the actuation device (26') in the direction (LR) of the friction shoulder (22, 23) arranged in each case next adjacent to them.

3. Tool according to claim 2, **characterized in that** the support shoulders (24', 25') are jointly loaded, in use, by the actuation device (26') arranged between them with the force directed in each case against the next adjacent friction shoulder (22, 23).

4. Tool according to one of the preceding claims, **characterized in that** the central shaft (21) has a cross-sectional shape deviating from a circle, in particular a polygonal cross-section.

5. Tool according to one of the preceding claims, **characterized in that** the central shaft (21) is composed of two or more parts which are coupled together in a rotationally fixed manner.

6. Tool according to one of the preceding claims, **characterized in that** at least one of the support shoulders (24', 25') is coupled to the central shaft (21) in a rotationally fixed manner.

7. Tool according to one of the preceding claims, **characterized in that** at least one of the friction shoulders (22, 23) is coupled to the central shaft (21) in a rotationally fixed manner.

8. Tool according to one of claims 1 to 5, **characterized in that** the support shoulders (24', 25') or the friction shoulders (22, 23) are decoupled from the rotary movement of the central shaft (21).

9. Tool according to one of the preceding claims, **characterized in that** the friction shoulders (22, 23), the support shoulders (24', 25') and the actuation device (26') are aligned coaxially with respect to the central shaft (21).

10. Tool according to one of the preceding claims, **characterized in that** the end faces (29, 30) of the friction shoulders (22, 23) facing each other are shaped annularly.

11. Tool according to one of the preceding claims, **characterized in that** the support shoulders (24', 25') are shaped as annular discs.

12. Method for the production of panels, which are composed of two panel elements (1, 2) prefabricated from weldable material, which each have, on mutually associated side faces, a recess (5, 6) extending in a channel-like manner along the respective side face, comprising the following work steps:
- providing the two panel elements (1,2);
- joining the panel elements (1, 2) such that their side faces provided with the channel-like recesses (5, 6) abut against one another and the channel-like recesses (5, 6) form a tunnel (14) which, when the panel elements (1, 2) are aligned horizontally, is delimited on its upper and lower side in each case by material sections (7a, 7b; 8a, 8b) of the panel elements (1, 2) protruding laterally from the respective panel element (1, 2) in a strut-like manner, of which the material sections (7a, 8a) associated with the upper side abut against one another in a first joining seam (13a) and the material sections (7a, 7b) associated with the lower side abut against one another in a second joining seam (13b);
- friction stir welding of the panel elements (1, 2) by guiding a tool (20') formed according to one of the preceding claims with its central shaft (21) acting as a welding pin along the joining seams (13a, 13b) between the panel elements (1, 2), wherein one friction shoulder (22) acts on the free surface (11) on the upper side and the other friction shoulder (23) acts on the free surface (12) on the lower side of the panel elements (1, 2) and wherein the support shoulders (24', 25') are arranged in the tunnel (14) and at least one of the support shoulders (24', 25') is pressed by the actuation device (26') against the surface facing the tunnel (14) of two abutting material portions (7a, 8a; 7b, 8b) of the panel elements (1, 2).

13. Method according to claim 12, **characterized in that** the support shoulders (24', 25') are coupled in a rotationally fixed manner to the central shaft (21), so that during the friction stir welding the material sections (7a, 8a; 7b, 8b) are each subjected to a friction stir load both from their free outer surface (11, 12) facing away from the tunnel (14) between the panel elements (1, 2) and from their surface facing the tunnel (14).

14. Method according to claim 12 or 13, **characterized in that** the panel elements (1, 2) are made of a light metal material.

## Revendications

1. Outil pour le soudage par friction-malaxage
- avec un axe central (21) qui est réalisé en forme de tige et qui est prévu pour l'accouplement à un dispositif d'entraînement,
- avec un premier épaulement de friction (22) qui est porté par l'axe central (21),
- avec un deuxième épaulement de friction (23) qui est porté par l'axe central (21) dans la direction longitudinale (LR) de l'axe central (21) à une distance du premier épaulement de friction (22),
- avec deux épaulements d'appui (24', 25') portés par l'axe central (21), qui sont disposés entre les épaulements de friction (22, 23) et dont au moins un est monté sur l'axe central (21) de manière à pouvoir coulisser axialement, et
- avec un dispositif d'actionnement (26') qui est disposé entre les épaulements d'appui (24', 25') et qui est configuré pour exercer, lors de l'utilisation, au moins sur l'épaulement d'appui (24', 25') coulissant axialement, une force qui est dirigée dans la direction (LR) de l'épaulement de friction (22, 23) disposé à chaque fois à proximité immédiate de l'épaulement d'appui (24', 25') coulissant axialement,
**caractérisé en ce que** le dispositif d'actionnement (26') comprend un actionneur (33) qui, lors de l'utilisation, est entraîné par les forces centrifuges (Ff) agissant alors dans la direction radiale vers l'extérieur loin de l'axe central (21) de l'outil (20') et en faisant cela agit contre une surface inclinée (34, 35) formée sur l'épaulement d'appui respectif (24', 25').

2. Outil selon la revendication 1, **caractérisé en ce que** les deux épaulements d'appui (24', 25') sont montés sur l'axe central (21) de manière à pouvoir coulisser axialement et sont chargés chacun, lors de l'utilisation, avec une force au moyen du dispositif d'actionnement (26') dans la direction (LR) de l'épaulement de friction (22, 23) disposé à chaque fois à proximité immédiate d'eux.

3. Outil selon la revendication 2, **caractérisé en ce que** les épaulements d'appui (24', 25') sont chargés conjointement par le dispositif d'actionnement (26') disposé entre eux, lors de l'utilisation, avec la force dirigée contre l'épaulement de friction (22, 23) disposé à chaque fois à proximité immédiate.

4. Outil selon l'une des revendications précédentes, **caractérisé en ce que** l'axe central (21) présente une forme de section transversale différente d'un cercle, en particulier une section transversale polygonale.

5. Outil selon l'une des revendications précédentes, **caractérisé en ce que** l'axe central (21) est composé de deux ou plusieurs parties qui sont couplées l'un avec l'autre de manière solidaire en rotation.

6. Outil selon l'une des revendications précédentes, **caractérisé en ce qu**' au moins l'un des épaulements d'appui (24', 25') est couplé avec l'axe central (21) de manière solidaire en rotation.

7. Outil selon l'une des revendications précédentes, **caractérisé en ce qu**' au moins l'un des épaulements de friction (22, 23) est couplé avec l'axe central (21) de manière solidaire en rotation.

8. Outil selon l'une des revendications 1 à 5, **caractérisé en ce que** les épaulements d'appui (24', 25') ou les épaulements de friction (22, 23) sont découplés du mouvement de rotation de l'axe central (21).

9. Outil selon l'une des revendications précédentes, **caractérisé en ce que** les épaulements de friction (22, 23), les épaulements d'appui (24', 25') et le dispositif d'actionnement (26') sont alignés coaxialement par rapport à l'axe central (21).

10. Outil selon l'une des revendications précédentes, **caractérisé en ce que** les surfaces frontales (29, 30) des épaulements de friction (22, 23) qui se font face sont en forme annulaire.

11. Outil selon l'une des revendications précédentes, **caractérisé en ce que** les épaulements d'appui (24', 25') sont en forme de disque annulaire.

12. Procédé pour la fabrication de panneaux, qui sont composés de deux éléments de panneau (1, 2) préfabriqués en matériau soudable, qui chacun présentent, sur des surfaces latérales associées l'une à l'autre, un évidement (5, 6) s'étendant en forme de canal le long de la surface latérale respective, comprenant les étapes de travail suivantes :
- la fournissage des deux éléments de panneau (1, 2) ;
- l'assemblage des éléments de panneau (1, 2) de telle sorte que leurs surfaces latérales pourvues des évidements en forme de canal (5, 6) viennent bout-à-bout et que les évidements en forme de canal (5, 6) forment un tunnel (14) qui, lorsque les éléments de panneau (1, 2) sont alignés horizontalement, est délimité sur sa face supérieure et sa face inférieure respectivement par des sections de matériau (7a, 7b; 8a, 8b) des éléments de panneau (1, 2), qui chacun dépassent latéralement de l'élément de panneau respectif à la manière d'une entretoise, et dont les sections de matériau (7a, 8a) associées à la face supérieure viennent bout-à-bout dans un premier joint d'assemblage (13a) et les sections de matériau (7a, 7b) associées à la face inférieure viennent bout-à-bout dans un deuxième joint d'assemblage (13b) ;
- le soudage par friction-malaxage des éléments de panneau (1, 2), en guidant un outil (20') réalisé selon l'une des revendications précédentes avec son axe central (21) agissant comme une tige de soudage le long des joints d'assemblage (13a, 13b) entre les éléments de panneau (1, 2), l'un des épaulements de friction (22) agissant sur la surface libre (11) sur la face supérieure et l'autre épaulement de friction (23) agissant sur la surface libre (12) sur la face inférieure des éléments de panneau (1, 2) et les épaulements d'appui (24', 25') étant disposés dans le tunnel (14) et au moins l'un des épaulements d'appui (24', 25') étant poussé par le dispositif d'actionnement (26') contre la surface, tournée vers le tunnel (14), de deux sections de matériau (7a, 8a; 7b, 8b) des éléments de panneau (1, 2).

13. Procédé selon la revendication 12, **caractérisé en ce que** les épaulements d'appui (24', 25') sont couplés avec l'axe central (21) de manière solidaire en rotation, de sorte que pendant le soudage par friction-malaxage, les sections de matériau (7a, 8a; 7b, 8b) sont chacun chargées par friction-malaxage aussi bien par leur surface extérieure libre (11, 12) opposée au tunnel (14) entre les éléments de panneau (1, 2) que par leur surface tournée vers le tunnel (14).

14. Procédé selon la revendication 12 ou 13, **caractérisé en ce que** les éléments de panneau (1, 2) sont constitués d'un matériau métallique léger.
